# EUROPÄISCHE PATENTSCHRIFT

(11) **EP 1 127 674 B1**
(45) Veröffentlichungstag und Bekanntmachung des Hinweises auf die Patenterteilung: **05.11.2003**
(21) Anmeldenummer: 01103313.1
(22) Anmeldetag: 13.02.2001
(51) Int. Cl.: B29C 45/17

(54) **Verfahren zum Spritzgiessen von mindestens einen Hohlraum aufweisenden Formteilen**
Method for injection moulding articles having at least one hollow section
Procédé pour mouler par injection des pièces comportant au moins une partie creuse

(30) Priorität: 22.02.2000 DE 10007994
(43) Veröffentlichungstag der Anmeldung: 29.08.2001
(73) Patentinhaber: Battenfeld GmbH, D-58540 Meinerzhagen (DE)
(72) Erfinder: Eckardt, Helmut, Dipl-Ing., 58540 Meinerzhagen (DE)

(56) Entgegenhaltungen:
- DE-A- 2 461 580
- DE-A- 2 800 482
- DE-A- 19 613 134
- DE-A- 19 903 682
- US-A- 5 705 201
- US-A- 5 928 677
- MICHAELI W ET AL: "GAS GEBEN MIT WASSER WASSERINJEKTIONSTECHNIK (WIT): EINE ALTERNATIVE ZUR GASINJEKTIONSTECHNIK?" KUNSTSTOFFE, CARL HANSER VERLAG. MUNCHEN, DE, Bd. 89, Nr. 4, April 1999 (1999-04), Seite 84,86 XP000963242 ISSN: 0023-5563
- VINK D: "TESTING THE WATER" EUROPEAN PLASTICS NEWS, IPC BUSINESS PRESS LTD. LONDON, GB, Bd. 26, Nr. 10, November 1999 (1999-11), Seiten 35-36, XP000963340 ISSN: 0306-3534

## Beschreibung

Die Erfindung betrifft ein Verfahren zum Spritzgießen von mindestens einen Hohlraum aufweisenden Formteilen aus thermoplastischem Kunststoffmaterial, das die Schritte aufweist:
a) Einspritzen von thermoplastischer Kunststoffschmelze von einer Einspritzeinheit entlang eines Schmelzefließweges in die Kavität eines Spritzgießwerkzeugs;
b) Einspritzen einer Flüssigkeit mit hoher Wärmekapazität in das noch schmelzflüssige Kunststoffmaterial, so daß dieses an die Wandungen der Kavität gepreßt wird;
c) Abkühlenlassen des Kunststoffmaterials, bis dieses selbsttragend das Formteil bildet;
d) Entformen des Formteils aus der Kavität des Spritzgießwerkzeugs,
wobei die Füllung der Kavität mit Kunststoffschmelze gemäß Schritt a) so erfolgt, daß die Kavität nicht vollständig mit Kunststoffschmelze, vorzugsweise nur zu maximal 80 % des Kavitätsvolumens, gefüllt wird, und
wobei die vollständige Bedeckung der Oberfläche der Kavität erst durch das Einspritzen der Flüssigkeit in das schmelzflüssige Kunststoffmaterial erfolgt.

Das gattungsgemäße Verfahren ist als Gas-Innendruck-Verfahren bei der Fertigung von Formteilen aus thermoplastischem Kunststoff bekannt und weit verbreitet. Ein solches Verfahren ist beispielsweise aus der **US 4,101,617** bekannt. Dabei wird in die noch schmelzflüssige Kunststoffschmelze ein Fluid unter Druck eingebracht. Durch den so im Inneren der Schmelze erzeugten Druck wird die Schmelze gegen die Kavitätswand des Spritzgießwerkzeugs gepreßt; Einfallstellen infolge Volumenkontraktion beim Abkühlen werden so vermieden.

Als Fluid, das unter Druck in die Schmelze injiziert wird, wird üblicherweise Stickstoffgas verwendet. Es hat den Vorteil, daß es als inertes Gas keiner chemischen Reaktion in der heißen Schmelze unterliegt. Dabei wird der Nachteil in Kauf genommen, daß der Stickstoff meist recht teuer in der Herstellung ist. Entweder muß die Spritzgießvorrichtung mit Stickstoff aus Flaschen versorgt werden oder das Gas wird vor Ort - bei größerem Gasbedarf - mittels Molekularfilter gewonnen.

Die immer weiter steigenden Anforderungen an die Wirtschaftlichkeit des Prozesses bedingen immer kürzere Spritzgießzyklen bei möglichst steigender Qualität der zu fertigenden Formteile. Um die kürzeren Zyklen zu erreichen, sind verschiedene Ansätze gemacht worden:

Die **EP 0 400 308 B1** schlägt vor, nach der Gasinjektion in die Schmelze das Gas an einer von der Einspritzstelle entfernten Stelle wieder austreten zu lassen; anschließend wird eine Zirkulation des Gases durch den geschaffenen Hohlraum bewerkstelligt. In den Gaskreislauf ist ein Kühler integriert. Damit soll ein schnellerer Abkühlungsprozeß der Schmelze erfolgen, da gekühltes Gas im geschlossenen Kreislauf zugeführt wird.

Die **DE 42 19 915 A1** stellt indes darauf ab, gekühltes Gas einzusetzen, das in die Schmelze eingespritzt wird. Dabei ist namentlich vorgesehen, daß das Gas auf Temperaturen bis zu - 160 °C abgekühlt wird. Auf diese Weise soll das Kunststoffmaterial so schnell wie möglich abkühlen; die Zeitspanne vom Einspritzen der Schmelze ins Spritzgießwerkzeug bis zur Entformung wird damit reduziert.

Bei den vorbekannten Verfahren ist es nachteilhaft, daß zum einen nach wie vor teurer Stickstoff erforderlich ist und zum anderen trotz aller Maßnahmen aufgrund der beschränkten Wärmekapazität des Gases der Abkühlungseffekt begrenzt bleibt. Unabhängig davon kommt es aufgrund des starken Viskositätsunterschiedes zwischen Schmelze und Gas zu dem Problem, daß mitunter Fließmarkierungen an der Formteiloberfläche auftreten, die die Qualität des zu fertigenden Formteils negativ beeinflussen.

Im Stand der Technik ist aber auch die Eingabe von Flüssigkeiten in ein schmelzeflüssiges Formteil bekannt. So beschreibt beispielsweise der Artikel "**Gas geben mit Wasser**", veröffentlicht im Carl Hanser Verlag Band 89 - April 1999 - ein Verfahren zur Wasserinjektion, bei dem von einem Reservoir Wasser in das Formteil eingegeben wird. Um das Wasser nach dem Formprozeß wieder aus dem Formteilinneren zu entfernen wird vorgeschlagen, entgegen der Eingaberichtung des Wassers Luft einzubringen, um das Wasser über die Eingabestelle beispielsweise zurück in das Reservoir zu drücken.

Die Eingabe von Flüssigkeiten ist aber auch aus der **DE 24 61 580** bekannt. Jedoch wird hier die Flüssigkeit vor der Eingabe auf die Temperatur des Harzes gebracht.

Der Erfindung liegt daher die **Aufgabe** zugrunde, das Spritzgießverfahren der gattungsgemäßen Art so weiterzuentwickeln, daß die genannten Nachteile vermieden werden. Das Verfahren soll es also möglich machen, ohne den Einsatz von teurem Stickstoff auszukommen. Des weiteren soll eine möglichst kurze Kühlzeit realisierbar sein, die den Spritzgießprozeß nennenswert verkürzt. Schließlich soll das Verfahren auch sicherstellen, daß ein möglichst homogener Fließverlauf der Schmelze in das Spritzgießwerkzeug erfolgt, so daß Umschaltmarkierungen möglichst vermieden werden können.

Die **Lösung** dieser Aufgabe durch die Erfindung ist dadurch gekennzeichnet,
dass nach Schritt b) und vor Schritt c) des weiteren Druckgas in den durch die Flüssigkeit gebildeten Hohlraum eingebracht wird.

Der Kerngedanke der Erfindung stellt also darauf ab, daß nach dem Flüssigkeitseinspritzen und vor dem Abkühlenlassen des Kunststoffs zusätzlich Druckgas in den durch die Flüssigkeit gebildeten Hohlraum eingebracht wird.

Mit dem in die Schmelze injizierten Fluid - eine Flüssigkeit mit hoher Wärmekapazität - kann, in Verbindung mit der Teilfüllung der Kavität, erreicht werden, daß zunächst ein effizienter Einsatz von Kunststoffmaterial erfolgt. Durch die Teilfüllung der Kavität mit Schmelze in Kombination mit der Verwendung von Flüssigkeit hoher Wärmekapazität wird erreicht, daß ein schneller Abkühlprozeß stattfindet, so daß die Zykluszeit des Spritzgießzyklus nennenswert reduziert werden kann. Dabei hat es sich überraschenderweise gezeigt, daß durch die genannten Merkmale kaum Fließmarkierungen auftreten, die ansonsten beim Gasinnendruckverfahren zu befürchten und zu beobachten sind. Dies wird auf die vergleichbare Viskosität der flüssigen Schmelze mit der eingespritzten Flüssigkeit hoher Wärmekapazität zurückgeführt.

Gemäß einer ersten Weiterbildung ist vorgesehen, daß während des obigen Verfahrensschrittes b) ein Teil des noch schmelzflüssigen Kunststoffmaterials aus der Kavität (5) in eine entformbare Nebenkavität (8) verdrängt wird. Der Fluß von Kunststoffmaterial von der Kavität (5) in die Nebenkavität (8) wird dabei bevorzugt durch Ventilmittel (9) gesteuert, die gemäß zeitlicher Vorgabe geöffnet bzw. geschlossen werden. Damit ist eine gezielte Beeinflussung des Überfließens der Schmelze von der Haupt- zu der Nebenkavität möglich.

Die Flüssigkeit kann entlang des Schmelzefließweges (4) durch den Angußbereich (11) in die Kavität (5) eingespritzt werden oder alternativ dazu direkt mittels einer Einspritzdüse (10) in die Kavität (5).

Im zweiten Falle kann es vorteilhaft sein, wenn ein Teil des sich in der Kavität (5) befindlichen Kunststoffmaterials während des obigen Schrittes b) durch die eingespritzte Flüssigkeit in Richtung auf die Einspritzeinheit (3) zu aus der Kavität (5) wieder heraus zurückgetrieben wird.

Eine weitere Verbesserung des Fließverhaltens der Schmelze bzw. der Steuerung dieses Verhaltens ergibt sich, wenn vor dem Einspritzen der thermoplastischen Kunststoffschmelze in der Kavität (5) ein gegenüber dem Umgebungsdruck erhöhter Druck durch Einbringen eines Gases aufgebaut wird. Dieser Gasdruck kann während des obigen Schrittes b) erst allmählich abgebaut werden. Der Abbau des Gasdruckes kann in Abhängigkeit davon gesteuert oder geregelt werden, wie der Einspritzdruck der Flüssigkeit während deren Einspritzung zunimmt.

Als eine besonders vorteilhafte Ausgestaltung hat es sich erwiesen, daß die Flüssigkeit vor dem Einspritzen in das noch schmelzflüssige Kunststoffmaterial temperiert wird. Hier ist namentlich daran gedacht, daß die Flüssigkeit auf einen vorgegebenen Temperaturbereich gekühlt wird. Als besonders vorteilhaft wird dabei ein Temperaturbereich zwischen 0 °C und 20 °C, vorzugsweise zwischen 4 °C und 15 °C, vorgesehen. Es kann aber auch erforderlich sein, beispielsweise bei Materialien, die durch eine schockartige Abkühlung geschädigt werden, die Flüssigkeit auf einen vorgegebenen Temperaturbereich zu erwärmen. Als besonders vorteilhart wird dabei ein Temperaturbereich zwischen 20 °C und 150 °C, vorzugsweise zwischen 40 °C und 100 °C, vorgesehen.

Bei dem erfindungsgemäßen Konzept kommt der Entfernung der eingespritzten Flüssigkeit - möglichst noch in der Spritzgießvorrichtung - eine besondere Bedeutung zu. Es bestehen hier erfindungsgemäß mehrere Möglichkeiten.

Zunächst kann vorgesehen werden, daß nach dem Abkühlenlassen und vor der Entformung folgender Verfahrensschritt ausgeführt wird:
c') Einpressen von Druckgas, vorzugsweise Druckluft, entlang des Weges, über den die Flüssigkeit in das Kunststoffmaterial eingespritzt wurde, und Ausblasen der Flüssigkeit aus dem Hohlraum (1) des Formteils (2) an mindestens einer Ausblasstelle (12), die sich an einer Stelle befindet, die von der Eingabestelle der Flüssigkeit entfernt ist.

Die Ausblasstelle (12) wird bevorzugt im Bereich des Fließwegendes des Kunststoffmaterials angeordnet.

Alternativ dazu kann vorgesehen werden, daß zu dem genannten Zeitpunkt folgender Verfahrensschritt ausgeführt wird:
c") Einpressen von Druckgas, vorzugsweise Druckluft, an einer Gaseingabestelle, die von der Stelle entfernt ist, an der die Flüssigkeit in das Kunststoffmaterial eingespritzt wurde, und Ausblasen der Flüssigkeit aus dem Hohlraum (1) des Formteils (2) über die Stelle, an der die Flüssigkeit in das Kunststoffmaterial eingespritzt wurde.

Neben dem Ausblasen der Flüssigkeit aus dem Hohlraum kommt auch ein Absaugen der Flüssigkeit in Frage. Dann ist vorgesehen, daß folgender Verfahrensschritt ausgeführt wird:
c"') Anlegen eines Vakuums an einer fluidisch mit dem flüssigkeitsgefüllten Hohlraum (1) in Verbindung stehenden Stelle, um die sich im Hohlraum (1) befindliche Flüssigkeit aus dem Hohlraum (1) abzusaugen.

Dabei wird mit Vorteil das Vakuum an die Einspritzdüse (10) für Flüssigkeit angelegt.

Der Formbildungsprozeß während des Einspritzens von Schmelze und von Flüssigkeit sowie während des Aushärtens des Materials kann durch entsprechende Steuerung bzw. Regelung der Mediendrücke günstig beeinflußt werden. Es ist daher vorteilhafterweise vorgesehen, daß auf die in die Kunststoffschmelze eingebrachte Flüssigkeit während der obigen Schritte b) und/oder c) ein Druck ausgeübt wird, der gemäß einem vorgegebenen Zeitprofil geregelt oder gesteuert wird. Das Druckprofil kann dabei gemäß einem pulsierend an- und absteigenden Verlauf geregelt oder gesteuert werden; dabei ist vor allem an einen sinusförmig um einen vorgegebenen konstanten Druckwert verlaufenden Druckverlauf gedacht. Alternativ kann auch vorgesehen werden, daß der Druck in einer ersten Zeitphase auf einem ersten, vorzugsweise konstanten, Niveau und in einer späteren, zweiten Zeitphase auf einem zweiten, vorzugsweise konstanten, Niveau geregelt oder gesteuert wird, wobei das erste Druckniveau niedriger als das zweite ist.

Als Flüssigkeit hoher Wärmekapazität kommt bevorzugt Wasser oder Öl in Frage.

In der Zeichnung ist ein Ausführungsbeispiel der Erfindung dargestellt. Die Figuren zeigen:
- Fig. 1: den schematischen Schnitt durch eine Spritzgieß - vorrichtung;
- Fig. 2: den schematischen Schnitt durch ein Spritzgießwerkzeug mit Nebenkavität;
- Fig. 3: denselben Schnitt wie in Fig. 2, jedoch ohne Nebenkavität;
- Fig. 4: einen Ausschnitt durch den Einspritzbereich für Schmelze und Flüssigkeit.

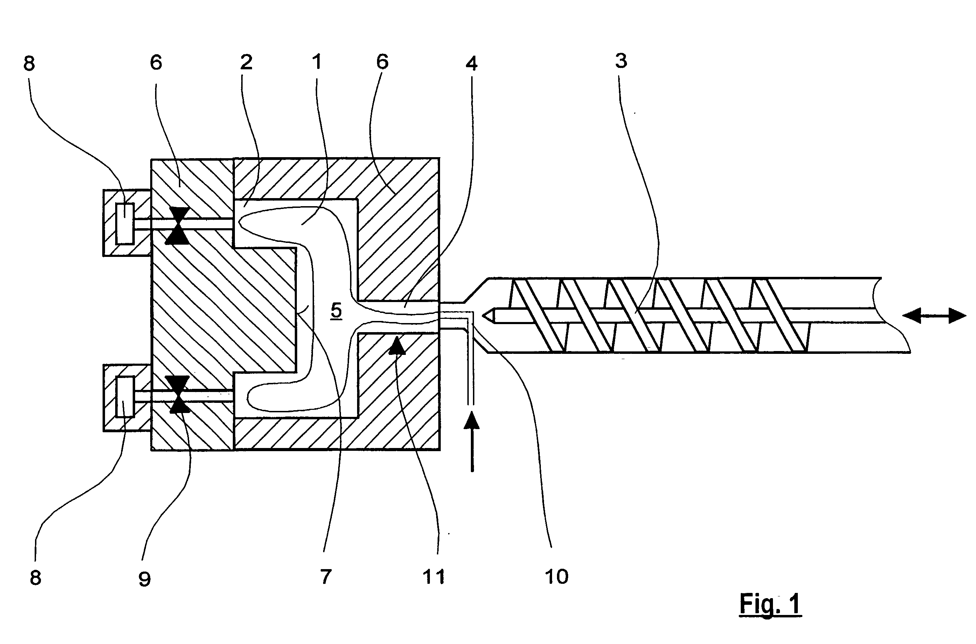

In Fig. 1 is eine Spritzgießvorrichtung zu sehen, die eine Einspritzeinheit 3 aufweist, die in üblicher Weise Kunststoffschmelze erzeugt und in ein Spritzgießwerkzeug 6 einspritzt. Das Werkzeug 6 hat eine Kavität 5 mit einer Kavitätswand 7. Die Kunststoffschmelze wird dabei entlang eines Schmelzefließweges 4 von der Einspritzeinheit 3 in das Werkzeug 6 gespritzt.

Das herzustellende Formteil 2 hat dabei einen Hohlraum 1, der zum einen das Teil leichter macht und weniger Materialeinsatz fordert, der es zum anderen ermöglicht, daß während des Abkühlens der Schmelze in der Kavität 5 diese gegen die Kavitätswand 7 gepreßt wird. Die produzierten Formteile 2 haben daher eine besonders gute Oberflächenqualität.

Es kann vorgesehen werden, daß während des Einspitzens der Schmelze in die Kavität 5 und/oder während der Eingabe des Fluids ein Teil der Schmelze in eine Überlaufkavität 8 überströmt. Das Überströmen kann durch Ventilmittel 9 gesteuert bzw. geregelt werden.

Das Einspritzen der Flüssigkeit erfolgt vorwiegend über die Einspritzdüse 10. Wie zu sehen ist, breitet sich die Flüssigkeit daher entlang des Schmelzefließweges 4 in Richtung der Kavität 5 aus.

Als Flüssigkeit kommt erfindungsgemäß eine Flüssigkeit mit hoher Wärmekapazität zum Einsatz. Das führt zu einer sehr kurzen Zykluszeit, da die Flüssigkeit viel Wärme von der Kunststoffschmelze aufnehmen kann. Diese erstarrt daher in kurzer Zeit, weshalb der Entformungsprozeß-verglichen mit bekannten Verfahren - früher starten kann.

Die Kavität 5 wird vor dem Einspritzen der Flüssigkeit zunächst teilweise gefüllt, wobei es sich als vorteilhaft gezeigt hat, daß sie nicht mit mehr als 80 % ihres Volumens gefüllt wird. Dann wird die Flüssigkeit, vorzugsweise Wasser, eingespritzt. Durch eine Temperierung der Flüssigkeit, namentlich durch eine Kühlung auf einen Wert zwischen 4 °C und 15 °C, kann erreicht werden, daß eine sehr schnelle Aushärtung der Kunststoffschmelze erfolgt, wobei es ausreicht, das Kunststoffmaterial derart zu kühlen, daß es selbsttragend ist.

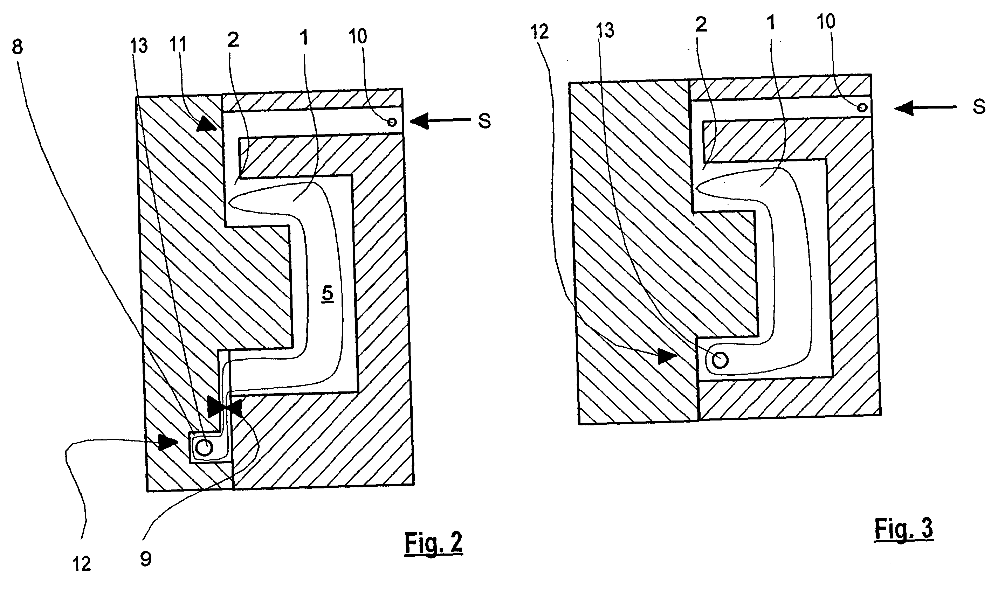

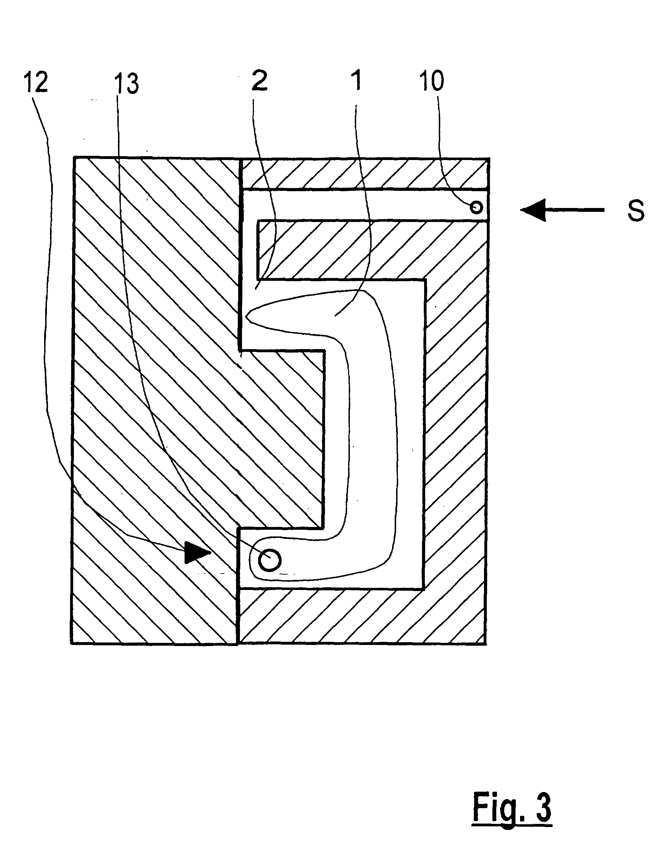

In Fig. 1 is zu sehen, daß die Eingabe der Flüssigkeit entlang des Schmelzefließweges 4 im Bereich des Angusses 11 erfolgt. Die detailliertere Ausgestaltung des Bereichs des Spritzgießwerkzeugs ist in den Figuren 2 und 3 wiedergegeben.

Wie in Fig. 2 zu sehen ist, wird Schmelze S im Angußbereich 11 in die Kavität 5 injiziert. Die Schmelze strömt, wie es bereits oben erwähnt wurde, am Fließwegende von der Hauptkavität 5 in die Nebenkavität 8, wobei mittels Ventilmitteln 9 das Überströmen geregelt wird. Nach dem zumindest teilweise erfolgtem Aushärten muß die Flüssigkeit, die den Hohlraum 1 füllt, aus diesem wieder entfernt werden. Hierzu wird Druckluft in die Einspritzdüse für Flüssigkeit 10 eingeleitet.

Wie der Figur 2 zu entnehmen ist, erstreckt sich der Hohlraum 1 über die Kavität 5 hinaus in die Nebenkavität, was durch die Eingabe von Flüssigkeit in die Schmelze bewerkstelligt wurde. Im Bereich der Überlaufkavität 8, nämlich an der Ausblasstelle 12 für Flüssigkeit, ist eine Ausblasdüse 13 positioniert. Durch die Druckluftinjektion durch die Düse 10 kann alle Flüssigkeit aus dem Hohlraum 1 wieder ausgeblasen werden. Sie wird durch die Ausblasdüse 13 ausgetrieben. Dabei kann - unterstützender Weise - an die Ausblasdüse 13 ein Vakuum angelegt werden.

In gleicher Weise ist das Ausblasen der Flüssigkeit auch möglich, wenn ohne Überlauf gearbeitet wird, was in Fig. 3 illustriert ist.

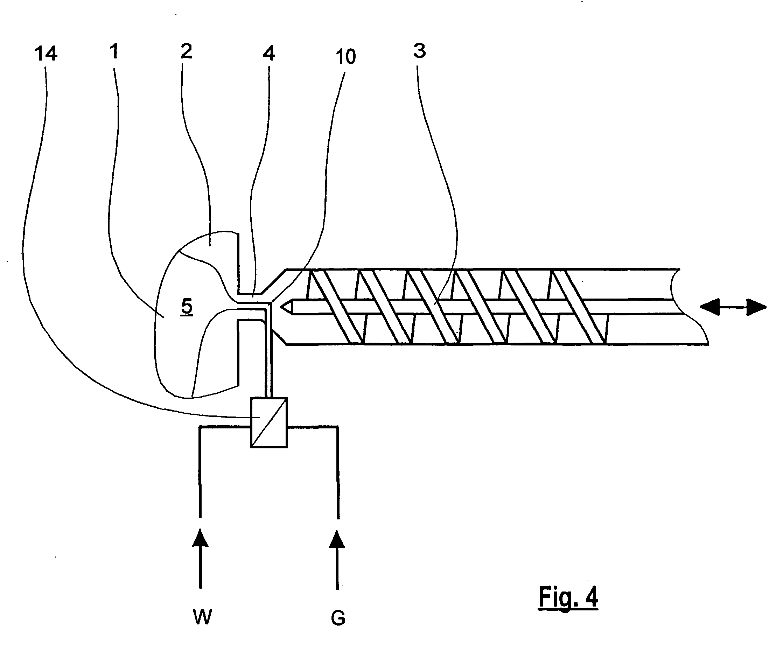

In Fig. 4 ist zu sehen, daß sich vorrichtungstechnisch eine besonders vorteilhafte Ausgestaltung ergibt, wenn ein Einspritzelement 14 verwendet wird, durch das wahlweise Flüssigkeit (Wasser) W bzw. Druckluft (Gas) G eingespritzt werden kann. In Fig. 4 reicht die Einspritzdüse 10 für Flüssigkeit und Gas zwar in den Bereich des Schmelzefließweges 4 von der Einspritzeinheit 3 in die Werkzeugkavität. Allerdings ist es genauso möglich, das kombinierte Einspritzelement 14 für Flüssigkeit und Gas so anzuordnen, daß es über die entsprechende Düse Flüssigkeit bzw. Gas direkt in die Kavität des Werkzeugs einspritzt.

Das vorstehend beschriebene Verfahren läßt sich vorteilhaft auch für sonst übliche Spritzgießverfahren einsetzten. Beispielsweise kann es auch gut eingesetzt werden, wenn das Formteil aus mehr als einer Kunststoffkomponente gespritzt wird (2-K-Verfahren).

Weiterhin ist es beispielsweise möglich, die Flüssigkeit an zwei Stellen ins Werkzeug zu injizieren, damit zwei Medienblasen zu erzeugen und diese durch entsprechende Drucksteuerung zu veranlassen, miteinander zu verschmelzen. Diese Technologie ist als solche bekannt.

Die Eingabe der Flüssigkeit kann weiterhin auch in den Angußverteiler erfolgen, wodurch mehrere Teilkavitäten mit Flüssigkeit versorgt werden können.

### Bezugszeichenliste:

- 1: Hohlraum
- 2: Formteil
- 3: Einspritzeinheit
- 4: Schmelzefließweg
- 5: Kavität
- 6: Spritzgießwerkzeug
- 7: Wandungen der Kavität
- 8: Nebenkavität
- 9: Ventilmittel
- 10: Einspritzdüse für Flüssigkeit
- 11: Angußbereich
- 12: Ausblasstelle für Flüssigkeit
- 13: Ausblasdüse
- 14: Einspritzelement
- S: Schmelze
- W: Flüssigkeit (Wasser)
- F: Gas

## Patentansprüche

1. Verfahren zum Spritzgießen von mindestens einen Hohlraum (1) aufweisenden Formteilen (2) aus thermoplastischem Kunststoffmaterial, das die Schritte aufweist:
a) Einspritzen von thermoplastischer Kunststoffschmelze von einer Einspritzeinheit (3) entlang eines Schmelzefließweges (4) in die Kavität (5) eines Spritzgießwerkzeugs (6);
b) Einspritzen einer Flüssigkeit mit hoher Wärmekapazität in das noch schmelzflüssige Kunststoffmaterial, so daß dieses an die Wandungen (7) der Kavität (5) gepreßt wird;
c) Abkühlenlassen des Kunststoffmaterials, bis dieses selbsttragend das Formteil (2) bildet;
d) Entformen des Formteils (2) aus der Kavität (5) des Spritzgießwerkzeugs (6);
wobei die Füllung der Kavität (5) mit Kunststoffschmelze gemäß Schritt a) so erfolgt, daß die Kavität (5) nicht vollständig mit Kunststoffschmelze, vorzugsweise nur zu maximal 80 % des Kavitätsvolumens, gefüllt wird, und
wobei die vollständige Bedeckung der Oberfläche der Kavität (5) erst durch das Einspritzen der Flüssigkeit in das schmelzflüssige Kunststoffmaterial erfolgt,
**dadurch gekennzeichnet,**
**dass** nach Schritt b) und vor Schritt c) des weiteren Druckgas in den durch die Flüssigkeit gebildeten Hohlraum (1) eingebracht wird.

2. Verfahren nach Anspruch 1, **dadurch gekennzeichnet, daß** während des Verfahrensschrittes b) gemäß Anspruch 1 ein Teil des noch schmelzflüssigen Kunststoffmaterials aus der Kavität (5) in eine entformbare Nebenkavität (8) verdrängt wird.

3. Verfahren nach Anspruch 2, **dadurch gekennzeichnet, daß** der Fluß von Kunststoffmaterial von der Kavität (5) in die Nebenkavität (8) durch Ventilmittel (9) gesteuert wird, die gemäß zeitlicher Vorgabe geöffnet bzw. geschlossen werden.

4. Verfahren nach einem der Ansprüche 1 bis 3, **dadurch gekennzeichnet, daß** die Flüssigkeit entlang des Schmelzefließweges (4) durch den Angußbereich (11) in die Kavität (5) eingespritzt wird.

5. Verfahren nach einem der Ansprüche 1 bis 3, **dadurch gekennzeichnet, daß** die Flüssigkeit direkt mittels einer Einspritzdüse (10) in die Kavität (5) eingespritzt wird.

6. Verfahren nach Anspruch 5, **dadurch gekennzeichnet, daß** ein Teil des sich in der Kavität (5) befindlichen Kunststoffmaterials während Schritt b) gemäß Anspruch 1 durch die eingespritzte Flüssigkeit in Richtung auf die Einspritzeinheit (3) zu aus der Kavität (5) heraus zurückgetrieben wird.

7. Verfahren nach einem der Ansprüche 1 bis 6, **dadurch gekennzeichnet, daß** vor dem Einspritzen der thermoplastischen Kunststoffschmelze nach Schritt a) gemäß Anspruch 1 in der Kavität (5) ein gegenüber dem Umgebungsdruck erhöhter Druck durch Einbringen eines Gases aufgebaut wird.

8. Verfahren nach Anspruch 7, **dadurch gekennzeichnet, daß** der Gasdruck während des Schrittes b) gemäß Anspruch 1 allmählich abgebaut wird.

9. Verfahren nach Anspruch 8, **dadurch gekennzeichnet, daß** der Abbau des Gasdruckes in Abhängigkeit davon gesteuert oder geregelt wird, wie der Einspritzdruck der Flüssigkeit während des Schrittes b) gemäß Anspruch 1 zunimmt.

10. Verfahren nach einem der Ansprüche 1 bis 9, **dadurch gekennzeichnet, daß** die Flüssigkeit vor dem Einspritzen in das noch schmelzflüssige Kunststoffmaterial nach Schritt a) gemäß Anspruch 1 temperiert wird.

11. Verfahren nach Anspruch 10, **dadurch gekennzeichnet, daß** die Flüssigkeit auf einen vorgegebenen Temperaturbereich gekühlt wird.

12. Verfahren nach Anspruch 11, **dadurch gekennzeichnet, daß** der vorgegebene Temperaturbereich zwischen 0 °C und 20 °C, vorzugsweise zwischen 4 °C und 15 °C, liegt.

13. Verfahren nach Anspruch 11, **dadurch gekennzeichnet, daß** der vorgegebene Temperaturbereich zwischen 20 °C und 150 °C, vorzugsweise zwischen 40 °C und 100 °C, liegt.

14. Verfahren nach einem der Ansprüche 1 bis 13, **dadurch gekennzeichnet, daß** nach Schritt c) und vor Schritt d) gemäß Anspruch 1 folgender Verfahrensschritt ausgeführt wird:
c') Einpressen von Druckgas, vorzugsweise Druckluft, entlang des Weges, über den die Flüssigkeit in das Kunststoffmaterial eingespritzt wurde, und Ausblasen der Flüssigkeit aus dem Hohlraum (1) des Formteils (2) an mindestens einer Ausblasstelle (12), die sich an einer Stelle befindet, die von der Eingabestelle der Flüssigkeit entfernt ist.

15. Verfahren nach Anspruch 14, **dadurch gekennzeichnet, daß** die Ausblasstelle (12) im Bereich des Fließwegendes des Kunststoffmaterials angeordnet wird.

16. Verfahren nach einem der Ansprüche 1 bis 13, **dadurch gekennzeichnet, daß** nach Schritt c) und vor Schritt d) gemäß Anspruch 1 folgender Verfahrensschritt ausgeführt wird:
c") Einpressen von Druckgas, vorzugsweise Druckluft, an einer Gaseingabestelle, die von der Stelle entfernt ist, an der die Flüssigkeit in das Kunststoffmaterial eingespritzt wurde, und Ausblasen der Flüssigkeit aus dem Hohlraum (1) des Formteils (2) über die Stelle, an der die Flüssigkeit in das Kunststoffmaterial eingespritzt wurde.

17. Verfahren nach einem der Ansprüche 1 bis 13, **dadurch gekennzeichnet, daß** nach Schritt c) und vor Schritt d) gemäß Anspruch 1 folgender Verfahrensschritt ausgeführt wird:
c"') Anlegen eines Vakuums an einer fluidisch mit dem flüssigkeitsgefüllten Hohlraum (1) in Verbindung stehenden Stelle, um die sich im Hohlraum (1) befindliche Flüssigkeit aus dem Hohlraum (1) abzusaugen.

18. Verfahren nach Anspruch 17, **dadurch gekennzeichnet, daß** das Vakuum an der Einspritzdüse (10) für Flüssigkeit angelegt wird.

19. Verfahren nach einem der Ansprüche 1 bis 18, **dadurch gekennzeichnet, daß** auf die in die Kunststoffschmelze eingebrachte Flüssigkeit während der Schritte b) und/oder c) gemäß Anspruch 1 ein Druck ausgeübt wird, der gemäß einem vorgegebenen Zeitprofil geregelt oder gesteuert wird.

20. Verfahren nach Anspruch 19, **dadurch gekennzeichnet, daß** der Druck gemäß einem pulsierend an- und absteigenden Profil geregelt oder gesteuert wird.

21. Verfahren nach Anspruch 20, **dadurch gekennzeichnet, daß** der Druckverlauf sinusförmig um einen vorgegebenen konstanten Druckwert verläuft.

22. Verfahren nach Anspruch 21, **dadurch gekennzeichnet, daß** der Druck in einer ersten Zeitphase auf einem ersten, vorzugsweise konstanten, Niveau und in einer späteren, zweiten Zeitphase auf einem zweiten, vorzugsweise konstanten, Niveau geregelt oder gesteuert wird, wobei das erste Druckniveau niedriger als das zweite ist.

23. Verfahren nach einem der Ansprüche 1 bis 22, **dadurch gekennzeichnet, daß** als Flüssigkeit Wasser eingesetzt wird.

24. Verfahren nach einem der Ansprüche 1 bis 22, **dadurch gekennzeichnet, daß** als Flüssigkeit Öl eingesetzt wird.

## Claims

1. Process for injection moulding of mouldings (2) made from thermoplastic plastic material having at least one cavity (1), which has the steps:
a) injection of thermoplastic plastic melt from an injection unit (3) along a melt flow path (4) into the cavity (5) of an injection-moulding die (6);
b) injection of a liquid having high thermal capacity into the still molten plastic material, so that the latter is pressed against the walls (7) of the cavity (5);
c) allowing the plastic material to cool, until the latter forms the moulding (2) in self-supporting manner;
d) releasing the moulding (2) from the cavity (5) of the injection-moulding die (6);
wherein filling of the cavity (5) with plastic melt according to step a) takes place so that the cavity (5) is not completely filled with plastic melt, preferably only to 80 % maximum of the cavity volume, and
wherein complete covering of the surface of the cavity (5) takes place only by injection of the liquid into the molten plastic material,
**characterised in that** after step b) and before step c), compressed gas is also introduced into the cavity (1) formed by the liquid.

2. Process according to claim 1, **characterised in that** during process step b) according to claim 1, some of the still molten plastic material is displaced from the cavity (5) into a releasable side cavity (8).

3. Process according to claim 2, **characterised in that** the flow of plastic material from the cavity (5) into the side cavity (8) is controlled by valve means (9), which are opened or closed according to a temporal setting.

4. Process according to one of claims 1 to 3, **characterised in that** the liquid is injected into the cavity (5) along the melt flow path (4) through the sprue region (11).

5. Process according to one of claims 1 to 3, **characterised in that** the liquid is injected directly into the cavity (5) by means of an injection nozzle (10).

6. Process according to claim 5, **characterised in that** some of the plastic material situated in the cavity (5) is driven back out of the cavity (5) during step b) according to claim 1 by the injected liquid in the direction of the injection unit (3).

7. Process according to one of claims 1 to 6, **characterised in that** before injection of the thermoplastic plastic melt according to step a) according to claim 1 into the cavity (5), a pressure which is increased compared to the ambient pressure is built up by introducing a gas.

8. Process according to claim 7, **characterised in that** the gas pressure is reduced gradually during step b) according to claim 1.

9. Process according to claim 8, **characterised in that** reduction of the gas pressure is controlled or regulated as a function of how the injection pressure of the liquid increases during step b) according to claim 1.

10. Process according to one of claims 1 to 9, **characterised in that** the liquid is tempered before injection into the still molten plastic material according to step a) according to claim 1.

11. Process according to claim 10, **characterised in that** the liquid is cooled to a preset temperature range.

12. Process according to claim 11, **characterised in that** the preset temperature range lies between 0°C and 20°C, preferably between 4°C and 15°C.

13. Process according to claim 11, **characterised in that** the preset temperature range lies between 20°C and 150°C, preferably between 40°C and 100°C.

14. Process according to one of claims 1 to 13, **characterised in that** after step c) and before step d) according to claim 1, the following process step is executed:
c') injection of compressed gas, preferably compressed air, along the path, via which the liquid was injected into the plastic material, and blowing out of the liquid from the cavity (1) of the moulding (2) at at least one blowing-out point (12), which is situated at a point which is remote from the input point of the liquid.

15. Process according to claim 14, **characterised in that** the blowing-out point (12) is arranged in the region of the flow path end of the plastic material.

16. Process according to one of claims 1 to 13, **characterised in that** after step c) and before step d) according to claim 1, the following process step is executed:
c") injection of compressed gas, preferably compressed air, at a gas input point, which is remote from the point, at which the liquid was injected into the plastic material, and blowing-out of the liquid from the cavity (1) of the moulding (2) via the point, at which the liquid was injected into the plastic material.

17. Process according to one of claims 1 to 13, **characterised in that** after step c) and before step d) according to claim 1, the following process step is executed:
c"') applying a vacuum at a point fluidly connected to the liquid-filled cavity (1) in order to draw off the liquid situated in the cavity (1) from the cavity (1).

18. Process according to claim 17, **characterised in that** the vacuum is applied at the injection nozzle (10) for liquid.

19. Process according to one of claims 1 to 18, **characterised in that** a pressure, which is regulated or controlled according to the preset time profile, is exerted on the liquid introduced into the plastic melt during step b) and/or c) according to claim 1.

20. Process according to claim 19, **characterised in that** the pressure is regulated or controlled according to an intermittently rising and falling profile.

21. Process according to claim 20, **characterised in that** the pressure course runs sinusoidally around a preset constant pressure value.

22. Process according to claim 21, **characterised in that** the pressure in a first time phase is regulated or controlled at a first, preferably constant, level and in a later, second time phase at a second, preferably constant, level, wherein the first pressure level is lower than the second.

23. Process according to one of claims 1 to 22, **characterised in that** water is used as the liquid.

24. Process according to one of claims 1 to 22, **characterised in that** oil is used as the liquid.

## Revendications

1. Procédé de moulage par injection de pièces (2) en thermoplastique présentant au moins un creux (1), qui présente les étapes suivantes :
a) injection de thermoplastique fondu dans la cavité (5) d'un moule d'injection (6) le long d'une voie d'écoulement de matière fondue (4) par un dispositif d'injection (3),
b) injection d'un liquidé à haute capacité thermique dans la matière plastique encore fondue, de sorte que celle-ci est pressée contre les parois (7) de la cavité (5),
c) refroidissement de la matière plastique jusqu'à ce que celle-ci forme, autoportante, la pièce moulée (2),
d) démoulage de la pièce moulée (2) de la cavité (5) du moule d'injection (6),
le remplissage de la cavité (5) de plastique fondu selon l'étape a) étant effectué de façon que la cavité (5) ne soit pas remplie complètement de plastique fondu, mais soit remplie de préférence seulement au maximum à 80 % de son volume, et
la couverture complète de la surface de la cavité (5) étant produite seulement par l'injection du liquide dans la matière plastique fondue,
**caractérisé par le fait**
**qu'**après l'étape b) et avant l'étape c), en outre, un gaz sous pression est introduit dans le creux (1) formé par le liquide.

2. Procédé selon la revendication 1, **caractérisé par le fait que** pendant l'étape b) de la revendication 1, une partie de la matière plastique encore fondue est chassée de la cavité (5) dans une cavité secondaire démoulable (8).

3. Procédé selon la revendication 2, **caractérisé par le fait que** l'écoulement de matière plastique de la cavité (5) dans la cavité secondaire (8) est commandé par des moyens d'obturation (9) qui sont ouverts et fermés suivant une règle temporelle.

4. Procédé selon l'une des revendications 1 à 3, **caractérisé par le fait que** le liquide est injecté dans la cavité (5) le long de la voie d'écoulement de matière fondue (4) à travers la zone d'entrée (11).

5. Procédé selon l'une des revendications 1 à 3, **caractérisé par le fait que** le liquide est injecté directement dans la cavité (5) au moyen d'une buse (10).

6. Procédé selon la revendication 5, **caractérisé par le fait qu'**une partie de la matière plastique se trouvant dans le cavité (5) est, pendant l'étape b) de la revendication 1, repoussée de la cavité (5) en direction du dispositif d'injection (3) par le liquide injecté.

7. Procédé selon l'une des revendications 1 à 6, **caractérisé par le fait qu'**avant l'injection du thermoplastique fondu selon l'étape a) de la revendication 1, une pression supérieure à la pression ambiante est établie dans la cavité (5) par introduction d'un gaz.

8. Procédé selon la revendication 7, **caractérisé par le fait que** pendant l'étape b) de la revendication 1, la pression de gaz est progressivement supprimée.

9. Procédé selon la revendication 8, **caractérisé par le fait que** la suppression de la pression de gaz est commandée ou régulée en fonction de la croissance de la pression d'injection du liquide pendant l'étape b) de la revendication 1.

10. Procédé selon l'une des revendications 1 à 9, **caractérisé par le fait que** la température du liquide est réglée avant l'injection de celui-ci dans la matière encore fondue selon l'étape b) de la revendication 1.

11. Procédé selon la revendication 10, **caractérisé par le fait que** le liquide est refroidi dans un domaine de température fixé.

12. Procédé selon la revendication 11, **caractérisé par le fait que** le domaine de température fixé est compris entre 0 °C et 20 °C, de préférence entre 4 °C et 15 °C.

13. Procédé selon la revendication 11, **caractérisé par le fait que** le domaine de température fixé est compris entre 20°C et 150°C, de préférence entre 40 °C et 100 °C.

14. Procédé selon l'une des revendications 1 à 13, **caractérisé par le fait qu'**après l'étape c) et avant l'étape d) de la revendication 1 est exécutée l'étape suivante :
c') injection de gaz sous pression, de préférence d'air comprimé, le long de la voie par laquelle le liquide a été injecté dans la matière plastique, et expulsion du liquide du creux (1) de la pièce moulée (2) à au moins un endroit d'expulsion (12) situé à un endroit éloigné de l'endroit d'entrée du liquide.

15. Procédé selon la revendication 14, **caractérisé par le fait que** l'endroit d'expulsion (12) est situé dans la zone de l'extrémité de la voie d'écoulement de la matière plastique.

16. Procédé selon l'une des revendications 1 à 13, **caractérisé par le fait qu'**après l'étape c) et avant l'étape d) de la revendication 1 est exécutée l'étape suivante :
c") injection de gaz sous pression, de préférence d'air comprimé, à un endroit d'entrée de gaz éloigné de l'endroit où le liquide a été injecté dans la matière plastique, et expulsion du liquide du creux (1) de la pièce moulée (2) par l'endroit où le liquide a été injecté dans la matière plastique.

17. Procédé selon l'une des revendications 1 à 13, **caractérisé par le fait qu'**après l'étape c) et avant l'étape d) de la revendication 1 est exécutée l'étape suivante :
c"') application d'un vide à un endroit relié fluidiquement au creux (1) rempli de liquide, pour aspirer du creux (1) le liquide qui s'y trouve.

18. Procédé selon la revendication 17, **caractérisé par le fait que** le vide est appliqué à la buse d'injection de liquide (10).

19. Procédé selon l'une des revendications 1 à 18, **caractérisé par le fait que** sur le liquide introduit dans le plastique fondu est exercée pendant les étapes b) et/ou c) de la revendication 1 une pression qui est régulée ou commandée selon un profil temporel fixé.

20. Procédé selon la revendication 19, **caractérisé par le fait que** la pression est régulée ou commandée selon un profil croissant et décroissant de manière pulsatoire.

21. Procédé selon la revendication 20, **caractérisé par le fait que** la variation de la pression est sinusoïdale autour d'une valeur constante fixée.

22. Procédé selon la revendication 21, **caractérisé par le fait que** la pression est régulée ou commandée, dans une première période, à un premier niveau de préférence constant, et, dans une deuxième période ultérieure, à un deuxième niveau de préférence constant, le premier niveau de pression étant inférieur au deuxième.

23. Procédé selon l'une des revendications 1 à 22, **caractérisé par le fait que** comme liquide est employée de l'eau.

24. Procédé selon l'une des revendications 1 à 22, **caractérisé par le fait que** comme liquide est employée de l'huile.
